# EUROPEAN PATENT APPLICATION

(11) **EP 4 712 183 A1**
(43) Date of publication of application: **18.03.2026**
(21) Application number: 25198893.7
(22) Date of filing: 29.08.2025
(51) Int. Cl.: H01M 10/04, H01M 10/058, B25J 9/00

(54) **APPARATUS, SYSTEM AND METHOD FOR TRANSFERRING ELECTRODE ASSEMBLY**

(30) Priority: 10.09.2024 KR 20240123122
(71) Applicant: SAMSUNG SDI CO., LTD., Yongin-si, Gyeonggi-do 17084 (KR)
(72) Inventor: SEO, Myunghwan, 17084 Yongin-Si, Gyeonggi-do (KR); YANG, Jiho, 17084 Yongin-Si, Gyeonggi-do (KR); UHM, Jushik, 17084 Yongin-Si, Gyeonggi-do (KR)
(74) Representative: Bardehle Pagenberg Partnerschaft mbB Patentanwälte Rechtsanwälte

(57) **Abstract**

An apparatus for transferring an electrode assembly includes a base, a support extending from the base, a gripper connected to the support, a driver configured to drive the gripper so that the gripper grips the electrode assembly, a transferer connected to the base and configured to move along a rail, and a controller configured to control the driver so that the gripper grips a side surface of the electrode assembly in a direction perpendicular to a long axis of the electrode assembly and to control the transferer so that the electrode assembly moves along the rail.

## Description

### BACKGROUND OF THE INVENTION

### 1. Field

Aspects of embodiments of the present disclosure relate to an apparatus, system, and method for transferring electrode assembly.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The electrode assembly may include an uncoated portion connected to the positive electrode or the negative electrode. The uncoated portion may be exposed to the outside of the electrode assembly. In the process of transferring the electrode assembly, in a situation where a transfer apparatus comes into contact with the uncoated portion of the electrode assembly exposed to the outside, foreign matters may penetrate into the uncoated portion or the uncoated portion may be damaged, which deteriorates the quality of the electrode assembly.

The above information disclosed in this Background section is for enhancement of understanding of the background of the present disclosure, and therefore, it may contain information that does not constitute related (or prior) art.

### SUMMARY OF THE INVENTION

Aspects of some embodiments of the present disclosure are directed to an apparatus, system, and method for transferring electrode assembly.

These and other aspects and features of the present disclosure will be described in or will be apparent from the following description of embodiments of the present disclosure.

According to some embodiments of the present disclosure, there is provided an apparatus for transferring an electrode assembly, the apparatus including: a base; a support extending from the base; a gripper connected to the support; a driver configured to drive the gripper so that the gripper grips the electrode assembly; a transferer connected to the base and configured to move along a rail; and a controller configured to control the driver so that the gripper grips a side surface of the electrode assembly in a direction perpendicular to a long axis of the electrode assembly and to control the transferer so that the electrode assembly moves along the rail.

In some embodiments, the support extends from the base in a first direction, and the gripper is connected to the support in a second direction perpendicular to the first direction.

In some embodiments, the gripper includes: a first gripper configured to support a first portion of the side surface of the electrode assembly; and a second gripper configured to support a second portion of the side surface of the electrode assembly opposite to the first portion.

In some embodiments, the first gripper includes: a body that does not come into contact with the electrode assembly; and a protrusion that protrudes from the body and come into contact with the electrode assembly in at least a portion thereof.

In some embodiments, the protrusion includes an anti-slip member.

In some embodiments, the apparatus further includes an elastic member positioned between the first gripper and the base and configured to enable the first gripper to apply a force to the first portion.

In some embodiments, the controller is configured to control the driver so that the first gripper approaches the first portion and the second gripper approaches the second portion.

In some embodiments, a position of the second gripper is fixed, and the controller is configured to control the driver so that the second gripper supports the second portion as the first gripper moves while supporting the electrode assembly in the first portion.

According to some embodiments of the present disclosure, there is provided a system for transferring an electrode assembly, the system including: an electrode assembly; and a transfer apparatus configured to transfer the electrode assembly, the transfer apparatus including: a base; a support extending from the base; a gripper connected to the support; a driver configured to drive the gripper so that the gripper grips the electrode assembly; a transferer connected to the base and configured to move along a rail; and a controller configured to control the driver so that the gripper grips a side surface of the electrode assembly in a direction perpendicular to a long axis of the electrode assembly and to control the transferer so that the electrode assembly moves along the rail.

In some embodiments, the electrode assembly is formed by winding a first electrode, a separator, and a second electrode, and an uncoated portion of the first electrode is bent in a direction of a core of the electrode assembly.

In some embodiments, a diameter of the electrode assembly is 40 mm to 50 mm.

In some embodiments, the support extends from the base in a first direction, and the gripper is connected to the support in a second direction perpendicular to the first direction.

In some embodiments, the gripper includes: a first gripper configured to support a first portion of the side surface of the electrode assembly; and a second gripper configured to support a second portion of the side surface of the electrode assembly opposite to the first portion.

In some embodiments, the first gripper includes: a body that does not come into contact with the electrode assembly; and a protrusion that protrudes from the body and come into contact with the electrode assembly in at least a portion thereof.

In some embodiments, the protrusion includes an anti-slip member.

In some embodiments, the transfer apparatus further includes an elastic member positioned between the first gripper and the base and configured to enable the first gripper to apply a force to the first portion.

In some embodiments, the controller is configured to control the driver so that the first gripper approaches the first portion and the second gripper approaches the second portion.

In some embodiments, a position of the second gripper is fixed, and the controller is configured to control the driver so that the second gripper supports the second portion as the first gripper moves while supporting the electrode assembly in the first portion.

According to some embodiments of the present disclosure, there is provided a method for transferring an electrode assembly, the method including: vertically aligning an electrode assembly; and transferring the electrode assembly by using a transfer apparatus, wherein the transfer apparatus includes: a base; a support extending from the base; a gripper connected to the support; a driver configured to drive the gripper so that the gripper grips the electrode assembly; and a transferer connected to the base and configured to move along a rail, wherein the transferring the electrode assembly includes: causing the gripper to grip a side surface of the electrode assembly in a direction perpendicular to a long axis of the electrode assembly at a first position by using the driver; and transferring the electrode assembly from the first position to a second position by using the transferer.

In some embodiments, the electrode assembly is formed by winding a first electrode, a separator, and a second electrode, and an uncoated portion of the first electrode is bent in a direction of a core of the electrode assembly.

According to some embodiments of the present disclosure, the apparatus for transferring an electrode assembly may use the gripper to grip the side surface of the electrode assembly so as not to come into contact with the uncoated portion of the electrode assembly exposed to the outside. In addition, due to the use of the elastic member, the center point of the electrode assembly may be maintained constant (e.g., be fixed in position or be static) irrespective of the size of the electrode assembly. Accordingly, the electrode assembly may be stably transferred without any damage to the quality of the electrode assembly in which the uncoated portion is exposed to the outside.

According to some embodiments of the present disclosure, because the electrode assembly is vertically transferred, the space for loading the electrode assembly may be reduced. Accordingly, the space within the process associated with the electrode assembly may be saved.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a front perspective view showing an apparatus for transferring an electrode assembly according to some embodiments of the present disclosure;
FIG. 2 illustrates a side view showing the apparatus for transferring an electrode assembly according to some embodiments of the present disclosure;
FIG. 3 illustrates a rear perspective view showing the apparatus for transferring an electrode assembly according to some embodiments of the present disclosure;
FIG. 4 illustrates a longitudinal cross-sectional view of an electrode assembly according to some embodiments of the present disclosure;
FIG. 5 illustrates an example in which an apparatus for transferring an electrode assembly grips an electrode assembly according to some embodiments of the present disclosure;
FIG. 6 illustrates an example in which an apparatus for transferring an electrode assembly grips an electrode assembly according to some embodiments of the present disclosure;
FIG. 7 illustrates a gripper according to some embodiments of the present disclosure;
FIG. 8 illustrates an anti-slip portion according to some embodiments of the present disclosure;
FIG. 9 illustrates an example in which an electrode assembly is loaded according to some embodiments of the present disclosure;
FIG. 10 illustrates a flowchart showing a method for transferring an electrode assembly according to some embodiments of the present disclosure; and
FIG. 11 illustrates an electrode assembly being transferred according to some embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local patent laws.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present disclosure, the sizes and relative sizes of layers and regions shown in the drawings may be exaggerated for clarity of description. That is, the sizes shown in the drawings are only for convenience of understanding and are not limited thereto. In addition, the same reference numerals denote the same elements throughout the specification.

In the present disclosure, a 'first portion' and a 'second portion' of a side surface of an electrode assembly may refer to a point where a gripper of an apparatus for transferring an electrode assembly comes into contact with the electrode assembly. The point that comes into contact with the electrode assembly may include a region adjacent to a contact point other than the point where the gripper comes into contact with the electrode assembly. That is, in the present disclosure, a 'first portion' and a 'second portion' may refer to a side region of the electrode assembly to which the gripper applies a force so as to grip the electrode assembly.

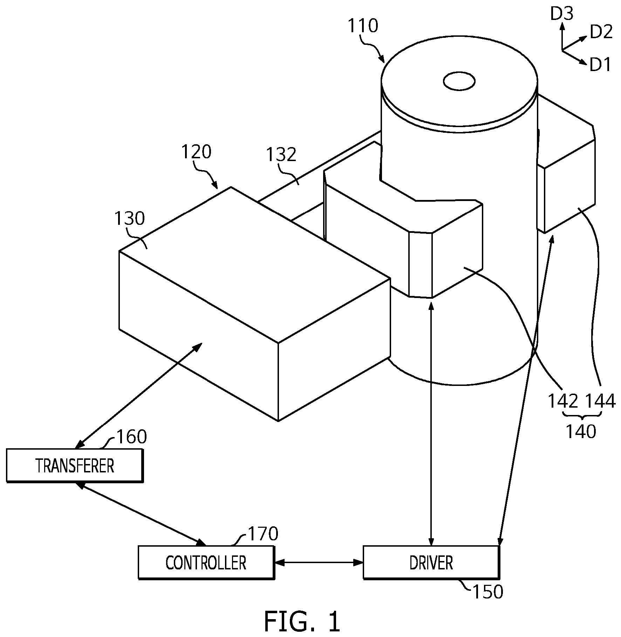

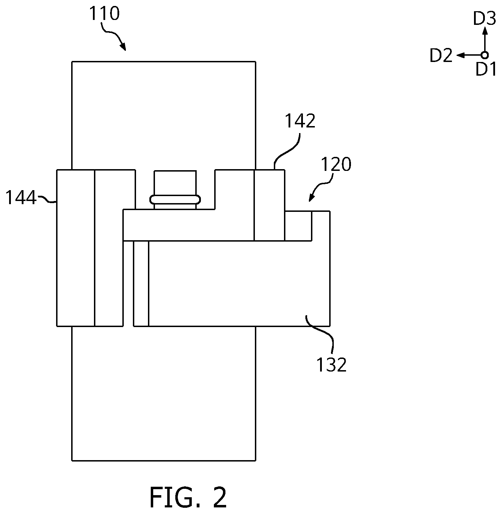

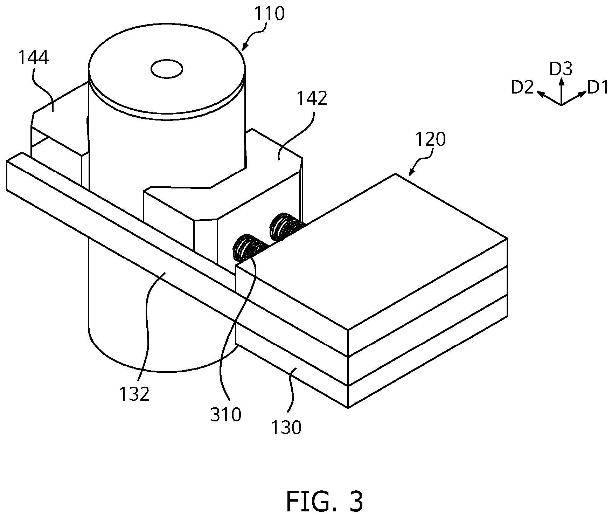

FIG. 1 illustrates a front perspective view showing an apparatus 120 for transferring an electrode assembly according to some embodiments of the present disclosure. FIG. 2 illustrates a side view showing the apparatus 120 for transferring an electrode assembly according to some embodiments of the present disclosure. FIG. 3 illustrates a rear perspective view showing the apparatus 120 for transferring an electrode assembly according to some embodiments of the present disclosure.

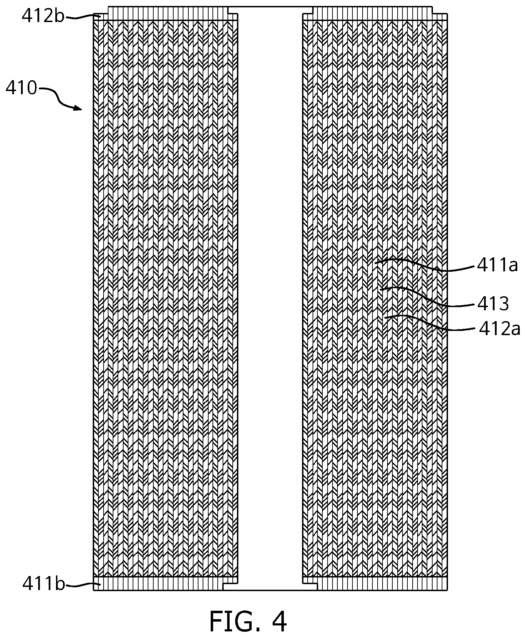

In some embodiments, an electrode assembly 110 may be formed by winding a positive electrode, a separator, and a negative electrode. In some embodiments, the electrode assembly 110 may include a plurality of uncoated portions connected to the positive electrode or the negative electrode. The uncoated portion may be exposed to the outside in a direction parallel to the long axis of the electrode assembly 110 (i.e., in a D3 direction). An example of the electrode assembly 110 is described in detail below with reference to FIG. 4.

In some embodiments, the apparatus for transferring an electrode assembly may include a base 130, a support 132 extending from the base 130, a gripper 140 connected to the support 132, a driver 150, a transferer 160, and a controller 170. The support 132 may extend from the base 130 in a first direction (i.e., in a D2 direction). In such examples, the gripper 140 may be connected to the support 132 in a second direction (i.e., a D1 direction) perpendicular to the first direction.

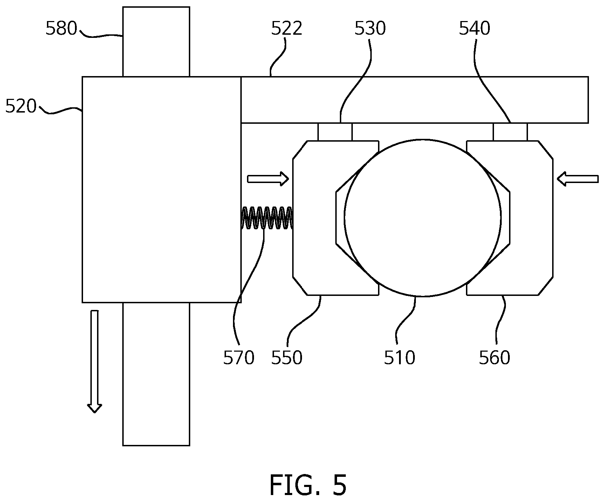

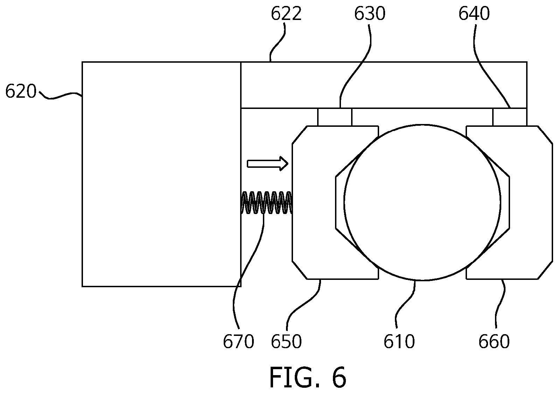

In some embodiments, the gripper 140 may include a first gripper 142 configured to support a first portion of a side surface of the electrode assembly 110 in a direction (i.e., in the D2 or D1 direction) perpendicular to a long axis direction (i.e., in a D3 direction) of the electrode assembly 110 and a second gripper 144 configured to support a second portion of the side surface of the electrode assembly 110 opposite to the first portion. The first gripper 142 may be positioned closer to the base 130 than the second gripper 144. In some embodiments, the apparatus 120 for transferring an electrode assembly may grip the electrode assembly 110 between the first gripper 142 and the second gripper 144. An example in which the gripper 140 grips the electrode assembly 110 is described in detail below with reference to FIGS. 5 and 6.

In some embodiments, the driver 150 may drive the gripper 140 to grip the electrode assembly 110. For example, the driver 150 may include an actuator connected to the first gripper 142 and/or the second gripper 144, but the present disclosure is not limited thereto, and the driver 150 may include various suitable devices for moving the first gripper 142 and/or the second gripper 144.

In some embodiments, the transferer 160 may be connected to the base 130 and configured to move along a rail. The transferer 160 may be positioned below the base 130. For example, the transferer 160 may include a slider so as to move along the rail, but the present disclosure is not limited thereto, and the transferer 160 may include various suitable transfer apparatuses.

In some embodiments, the apparatus 120 for transferring an electrode assembly may further include an elastic member (e.g., spring) 310 between the first gripper 142 and the base 130. The elastic member 310 may enable the first gripper 142 to apply a force to the first portion of the side surface of the electrode assembly 110. For example, the elastic member 310 may include a spring, but the present disclosure is not limited thereto. In FIG. 3, two elastic members 310 are shown, but the present disclosure is not limited thereto, and the elastic members 310 may be variously modified in a suitable manner.

In some embodiments, the controller 170 may control the driver 150 to cause the gripper 140 to grip the side surface of the electrode assembly 110 in a direction (i.e., the D2 or D1 direction) perpendicular to the long axis of the electrode assembly 110. In some embodiments, the controller 170 may control the driver 150 to move the first gripper 142 and the second gripper 144 toward the electrode assembly 110 to grip the side surface of the electrode assembly 110. In some embodiments, while the position of the second gripper 144 is fixed, the controller 170 may control the driver 150 to move the first gripper 142 toward the electrode assembly 110 (i.e., the direction in which the second gripper 144 is positioned) so that the gripper 140 grips the side surface of the electrode assembly 110.

In FIGS. 1 to 3, the electrode assembly 110 is shown as a wound type, but the present disclosure is not limited thereto, and the apparatus 120 for transferring an electrode assembly may transfer a stacked electrode assembly.

With this configuration, the apparatus for transferring an electrode assembly may use the gripper to grip the side surface of the electrode assembly so as not to come into contact with the uncoated portion of the electrode assembly exposed to the outside. In addition, due to the use of the elastic member, the center point of the electrode assembly may be maintained constant (e.g., be fixed in position) irrespective of the size of the electrode assembly. Accordingly, the electrode assembly may be stably transferred without any damage to the quality of the electrode assembly in which the uncoated portion is exposed to the outside.

FIG. 4 illustrates a longitudinal cross-sectional view of an electrode assembly 410 according to some embodiments of the present disclosure. Referring to FIG. 4, the electrode assembly 410 may be formed in a cylindrical jelly roll state with an empty core by winding first electrodes 411a and 411b, a separator 413, and second electrodes 412a and 412b. The first electrodes 411a and 411b and the second electrodes 412a and 412b may respectively include coated portions 411a and 412a in which an active material is applied onto opposite surfaces of a substrate formed of a thin metal plate, and uncoated portion 411b and 412b in which the substrate is exposed because the active material is not applied.

In some embodiments, the first electrodes 411a and 411b may be electrodes corresponding to a positive electrode or a negative electrode in the electrode assembly 410. The second electrodes 412a and 412b may be electrodes having an opposite polarity to the first electrodes 411a and 411b. For example, the first electrodes 411a and 411b may be positive electrodes and the second electrodes 412a and 412b may be negative electrodes. In other examples, the first electrodes 411a and 411b may be negative electrodes and the second electrodes 412a and 412b may be positive electrodes.

In some embodiments, the first electrodes 411a and 411b may form a positive electrode by coating a positive electrode active material on an aluminum (Al) substrate, and the second electrodes 412a and 412b may form a negative electrode by coating a negative electrode active material on a copper (Cu) substrate. The uncoated portion 411b of the first electrode and the uncoated portion 412b of the second electrode may be respectively provided at opposite ends of the electrode assembly 410 in the winding axis direction.

In some embodiments, the uncoated portions 411b and 412b of the electrode assembly 410 may be exposed to the outside. In some embodiments, the uncoated portions 411b and 412b may be bent in the direction of the core of the electrode assembly 410. The diameter of the electrode assembly 410 may be 40 mm to 50 mm.

FIG. 5 illustrates an example in which an apparatus for transferring an electrode assembly grips an electrode assembly 510 according to some embodiments of the present disclosure. In some embodiments, the apparatus for transferring an electrode assembly may include a base 520, a support 522 extending from the base 520, and a first gripper 550 and a second gripper 560 that grip the electrode assembly 510. The first gripper 550 may be connected to the support 522 through the first connecting portion 530. Similarly, the second gripper 560 may be connected to the support 522 through a second connecting portion 540. The first connecting portion 530 and the second connecting portion 540 may be connected to the driver (e.g., 150 of FIG. 1).

In some embodiments, the apparatus for transferring an electrode assembly may grip the electrode assembly 510 by using the first gripper 550 and the second gripper 560. In some embodiments, the controller (e.g., 170 of FIG. 1) of the apparatus for transferring an electrode assembly may control the driver so that the first gripper 550 approaches toward the first portion of the side surface of the electrode assembly 510 and the second gripper 560 approaches toward the second portion of the side surface of the electrode assembly 510 opposite to the first portion. Accordingly, the first gripper 550 and the second gripper 560 positioned to face each other may move toward the electrode assembly 510 located between the first gripper 550 and the second gripper 560.

In some embodiments, the apparatus for transferring an electrode assembly may further include an elastic member 570. The elastic member 570 may be positioned between the first gripper 550 and the base 520. In some embodiments, the elastic member 570 may enable the first gripper 550 to apply a force to the first portion of the side surface of the electrode assembly 510.

In some embodiments, the apparatus for transferring an electrode assembly may move along a rail 580. In some embodiments, the apparatus for transferring an electrode assembly may move the electrode assembly 510 from a first position to a second position in a gripped state by using the transferer (e.g., 160 of FIG. 1). The first position may indicate a position where the electrode assembly 510 is gripped, and the second position may indicate a destination to which the electrode assembly 510 is to be transferred. The apparatus for transferring an electrode assembly may release the grip of the electrode assembly 510 at the second position and then return to the first position.

FIG. 6 illustrates an example in which an apparatus for transferring an electrode assembly grips an electrode assembly 610 according to some embodiments of the present disclosure. In some embodiments, the apparatus for transferring an electrode assembly may include a base 620, a support 622 extending from the base 620, and a first gripper 650 and a second gripper 660 that grip the electrode assembly 610. The first gripper 650 may be connected to the support 622 through a first connecting portion 630. Similarly, the second gripper 660 may be connected to the support 622 through a second connecting portion 640. The first connecting portion 630 and the second connecting portion 640 may be connected to the driver (e.g., 160 of FIG. 1).

In some embodiments, the apparatus for transferring an electrode assembly may grip the electrode assembly 610 by using the first gripper 650 and the second gripper 660. In some embodiments, the position of the second gripper 660 may be fixed. In such examples, the controller of the apparatus for transferring an electrode assembly (e.g., 170 of FIG. 1) may control the driver so that the second gripper 660 supports the second portion of the side surface of the electrode assembly 610 as the first gripper 650 moves while supporting the electrode assembly 610 in the first portion of the side surface of the electrode assembly 610.

In some embodiments, the apparatus for transferring an electrode assembly may further include an elastic member 670. The elastic member 670 may be positioned between the first gripper 650 and the base 620. In some embodiments, the elastic member 670 may enable the first gripper 650 to apply a force to the first portion of the side surface of the electrode assembly 610.

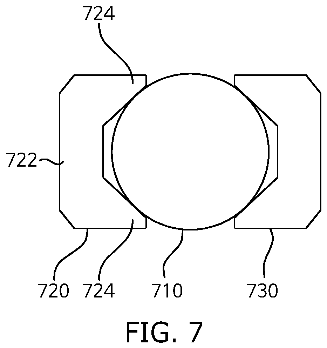

FIG. 7 illustrates a gripper according to some embodiments of the present disclosure. In some embodiments, the gripper of the apparatus for transferring an electrode assembly may include a first gripper 720 configured to support a first portion of a side surface of an electrode assembly 710 and a second gripper 730 configured to support a second portion of the side surface of the electrode assembly 710 opposite to the first portion. The first portion and the second portion may include a point where the first gripper 720 and the second gripper 730 come into direct contact with each other and a side portion between the point where the first gripper 720 and the second gripper 730 come into contact with an adjacent area.

In some embodiments, the first gripper 720 may include a body 722 that does not come into contact with the electrode assembly 710 and a protrusion 724 that protrudes from the body 722 and comes into contact with the electrode assembly in at least a portion thereof. The second gripper 730 may also be formed symmetrically and similarly to the first gripper 720. In some embodiments, the protrusions 724 protrude on opposite sides of one side surface of the body 722 adjacent to the electrode assembly 710, so that the first gripper 720 may have a C-shape. Accordingly, the first gripper 720 may support a plurality of first portions of the electrode assembly 710. Similarly, the second gripper 730 may support a plurality of second portions of the electrode assembly 710.

In FIG. 7, the first gripper 720 and the second gripper 730 are shown as having a C shape, but the present disclosure is not limited thereto, and the first gripper 720 and the second gripper 730 may include various suitable modifications capable of stably gripping the electrode assembly 710. In some embodiments, although it has been described with reference to FIG. 7 that the body 722 does not come into contact with the electrode assembly 710, the present disclosure is not limited thereto. In examples in which the size of the electrode assembly 710 is small, the first gripper 720 and the second gripper 730 may grip the electrode assembly 710 as the body 722 comes into contact with the electrode assembly 710.

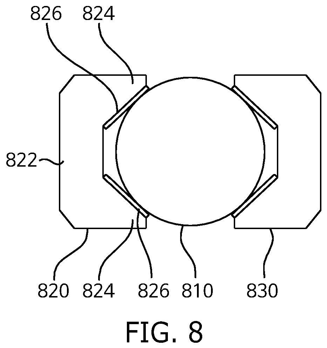

FIG. 8 illustrates an anti-slip portion 826 according to some embodiments of the present disclosure. In some embodiments, the gripper of the apparatus for transferring an electrode assembly may include a first gripper 820 configured to support a first portion of a side surface of an electrode assembly 810 and a second gripper 830 configured to support a second portion of the side surface of the electrode assembly 810 opposite to the first portion. The first gripper 820 may include a body 822 that does not come into contact with the electrode assembly 810 and a protrusion 824 that protrudes from the body 822 and comes into contact with the electrode assembly in at least a portion thereof.

In some embodiments, the protrusion 824 may include the anti-slip portion 826. The anti-slip portion 826 may be positioned between the protrusion 824 and the electrode assembly 810 to prevent the electrode assembly 810 from slipping, thereby causing the first gripper 820 to more stably support the first portion of the side surface of the electrode assembly 810. For example, the anti-slip portion 826 may be a rubber pad or a silicone pad, but the present disclosure is not limited thereto.

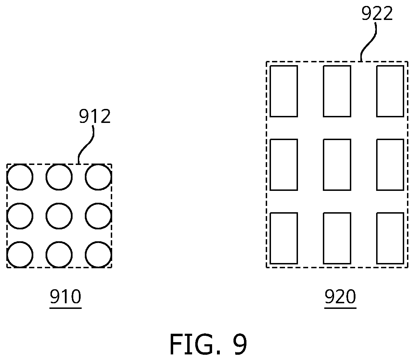

FIG. 9 illustrates an example in which an electrode assembly is loaded according to some embodiments of the present disclosure. A first example 910 shows a situation in which the apparatus for transferring an electrode assembly transfers the electrode assembly vertically. A second example 920 shows a situation in which the apparatus for transferring an electrode assembly transfers the electrode assembly horizontally. The length of the electrode assembly in the long axis direction is greater than the diameter of the electrode assembly. That is, the size of a region 912 where the electrode assembly is loaded vertically may be smaller than the size of a region 922 where the electrode assembly is loaded horizontally. Accordingly, the space for loading the electrode assembly is reduced, and thus, the space within the process associated with the electrode assembly may be saved.

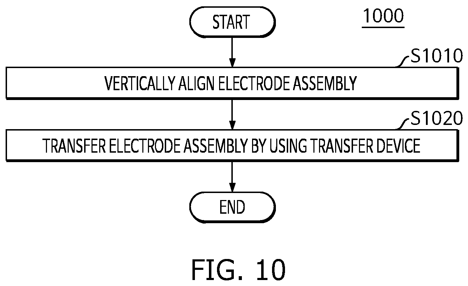

FIG. 10 illustrates a flowchart showing a method 1000 for transferring an electrode assembly according to some embodiments of the present disclosure. In some embodiments, the method 1000 for transferring an electrode assembly may be initiated by vertically aligning the electrode assembly (S1010). The electrode assembly may be formed by winding the first electrode, the separator, and the second electrode. In some embodiments, the uncoated portion of the first electrode may be bent in the direction of the core of the electrode assembly. The diameter of the electrode assembly may be 40 mm to 50 mm, but the present disclosure is not limited thereto.

Thereafter, the electrode assembly may be transferred by using a transfer apparatus (S1020). The transfer apparatus may include a base, a support extending from the base, a gripper connected to the support, a driver for driving the gripper to grip the electrode assembly, and a transferer connected to the base and configured to move along a rail. In some embodiments, the driver may be used to cause the gripper to grip the side surface of the electrode assembly in a direction perpendicular to the long axis of the electrode assembly at a first position. In some embodiments, the electrode assembly may move from the first position to a second position.

In some embodiments, the support may extend in a first direction from the base. In some embodiments, the gripper may be connected to the support in a second direction perpendicular to the first direction.

In some embodiments, the gripper may include a first gripper configured to support a first portion of a side surface of the electrode assembly and a second gripper configured to support a second portion of the side surface of the electrode assembly opposite to the first portion. In some embodiments, the transfer apparatus may further include an elastic member positioned between the first gripper and the base and configured to enable the first gripper to apply a force to the first portion.

In some embodiments, the first gripper may include a body that does not come into contact with the electrode assembly and a protrusion that protrudes from the body and comes into contact with the electrode assembly in at least a portion thereof. In some embodiments, the protrusion may include the anti-slip portion. The second gripper may be configured similarly to the first gripper.

In some embodiments, the driver may be used to cause the first gripper to approach the first portion of the side surface of the electrode assembly. In some embodiments, the driver may be used to cause the second gripper to approach the second portion of the side surface of the electrode assembly.

In some embodiments, the position of the second gripper may be fixed. In such examples, the driver may be used so that the first gripper may move while supporting the electrode assembly in the first portion. Accordingly, the second gripper may support the second portion.

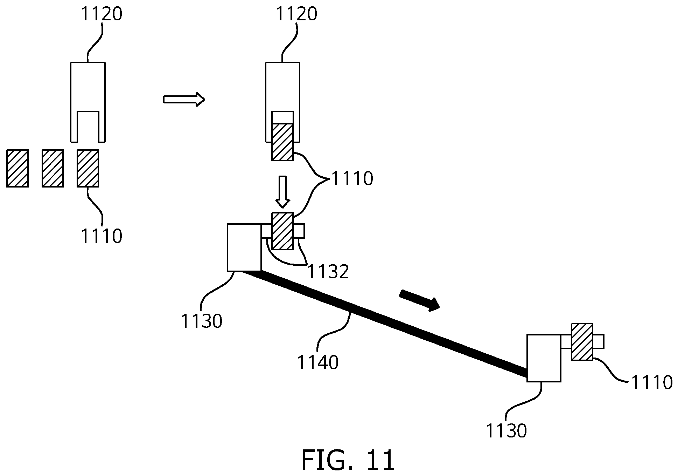

FIG. 11 illustrates an electrode assembly 1110 being transferred according to some embodiments of the present disclosure. In some embodiments, the electrode assembly 1110 may be vertically aligned. In such examples, a transfer picker 1120 may move downward from above the electrode assembly 1110 and grip the electrode assembly 1110. In some embodiments, the transfer picker 1120 may move while gripping the electrode assembly 1110 and then transfer the electrode assembly 1110 to the transfer apparatus (e.g., 120 of FIG. 1) 1130.

In some embodiments, the transfer apparatus 1130 may grip the electrode assembly 1110 by using the gripper 1132. In such examples, the transfer apparatus 1130 may move along the rail 1140 while gripping the electrode assembly 1110. Accordingly, the transfer apparatus 1130 may transfer the electrode assembly 1110 to the destination.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

### DESCRIPTION OF SOME REFERENCE SYMBOLS

110: electrode assembly
120: apparatus for transferring electrode assembly
130: base
132: support
140: gripper
142: first gripper
144: second gripper
150: driver
160: transferer
170: controller
310: elastic member

## Claims

1. An apparatus (120) for transferring an electrode assembly (110), the apparatus (120) comprising:
a base (130);
a support (132) extending from the base (130);
a gripper (140) connected to the support (132);
a driver (150) configured to drive the gripper (140) so that the gripper (140) grips the electrode assembly (110);
a transferer (160) connected to the base (130) and configured to move along a rail; and
a controller (170) configured to control the driver (150) so that the gripper (140) grips a side surface of the electrode assembly (110) in a direction perpendicular to a long axis of the electrode assembly (110) and to control the transferer (160) so that the electrode assembly (110) moves along the rail.

2. **The** apparatus (120) as claimed in claim 1, wherein the support (132) extends from the base (130) in a first direction, and
wherein the gripper (140) is connected to the support (132) in a second direction perpendicular to the first direction.

3. **The** apparatus (120) as claimed in claim 1 or claim 2, wherein the gripper (140) comprises:
a first gripper (142) configured to support a first portion of the side surface of the electrode assembly (110); and
a second gripper (144) configured to support a second portion of the side surface of the electrode assembly (110) opposite to the first portion.

4. **The** apparatus (120) as claimed in claim 3, wherein the first gripper (142) comprises:
a body (722) that does not come into contact with the electrode assembly (110); and
a protrusion (724) that protrudes from the body (722) and come into contact with the electrode assembly (110) in at least a portion thereof.

5. **The** apparatus (120) as claimed in claim 4, wherein the protrusion (724) comprises an anti-slip member (826).

6. **The** apparatus (120) of any one of the preceding claims 3 to 5, further comprising an elastic member (310) positioned between the first gripper (142) and the base (130) and configured to enable the first gripper (142) to apply a force to the first portion.

7. **The** apparatus (120) of any one of the preceding claims 3 to 6, wherein the controller (170) is configured to control the driver (150) so that the first gripper (142) approaches the first portion and the second gripper (144) approaches the second portion.

8. **The** apparatus (120) of any one of the preceding claims 3 to 7, wherein a position of the second gripper (144) is fixed, and
wherein the controller (170) is configured to control the driver (150) so that the second gripper (144) supports the second portion as the first gripper (142) moves while supporting the electrode assembly (110) in the first portion.

9. A method (1000) for transferring an electrode assembly (110), the method (1000) comprising:
vertically aligning an electrode assembly (110); and
transferring the electrode assembly (110) by using a transfer apparatus (120),
wherein the transfer apparatus (120) comprises:
a base (130);
a support (132) extending from the base (130);
a gripper (140) connected to the support (132);
a driver (150) configured to drive the gripper (140) so that the gripper (140) grips the electrode assembly (110); and
a transferer (160) connected to the base (130) and configured to move along a rail,
wherein the transferring the electrode assembly (110) comprises:
causing the gripper (140) to grip a side surface of the electrode assembly (110) in a direction perpendicular to a long axis of the electrode assembly (110) at a first position by using the driver (150); and
transferring the electrode assembly (110) from the first position to a second position by using the transferer (160).

10. The method (1000) as claimed in claim 9, wherein the electrode assembly (410) is formed by winding a first electrode (411a, 411b), a separator (413), and a second electrode (412a, 412b), and
wherein an uncoated portion (411b) of the first electrode is bent in a direction of a core of the electrode assembly (410).

11. The method (1000) as claimed in claim 9 or claim 10, wherein a diameter of the electrode assembly (110) is 40 mm to 50 mm.

12. The method (1000) of any one of the preceding claims 9 to 11, wherein the support (132) extends from the base (130) in a first direction, and
wherein the gripper (140) is connected to the support (132) in a second direction perpendicular to the first direction.

13. The method (1000) of any one of the preceding claims 9 to 12, wherein the gripper (140) comprises:
a first gripper (142) configured to support a first portion of the side surface of the electrode assembly (110); and
a second gripper (144) configured to support a second portion of the side surface of the electrode assembly (110) opposite to the first portion.

14. The method (1000) as claimed in claim 13, wherein the first gripper (142) comprises:
a body (722) that does not come into contact with the electrode assembly (110); and
a protrusion (724) that protrudes from the body (722) and come into contact with the electrode assembly (110) in at least a portion thereof.

15. The method (1000) as claimed in claim 14, wherein the protrusion (724) comprises an anti-slip member (826).
